# EUROPEAN PATENT SPECIFICATION

(11) **EP 2 979 846 B1**
(45) Date of publication and mention of the grant of the patent: **11.03.2020**
(21) Application number: 14773772.0
(22) Date of filing: 28.03.2014
(51) Int. Cl.: B29C 63/30, E03F 3/04, E03F 7/00, E04G 21/18, F16L 1/00

(54) **SLIDE JIG FOR CONNECTION OF SURFACE MATERIALS, AND METHOD FOR LAYING SURFACE MATERIAL USING SLIDE JIG FOR CONNECTION**
SCHIEBER ZUR VERBINDUNG VON OBERFLÄCHENMATERIALIEN UND VERFAHREN ZUM VERLEGEN VON OBERFLÄCHENMATERIAL ANHAND DES SCHIEBERS ZUR VERBINDUNG
GABARIT COULISSANT POUR ASSEMBLAGE DE REVETEMENTS, ET PROCEDE DE POSE DE REVETEMENT A L'AIDE DU GABARIT COULISSANT POUR ASSEMBLAGE

(30) Priority: 29.03.2013 JP 2013072998
(43) Date of publication of application: 03.02.2016
(73) Proprietor: Takiron Engineering Co. Ltd., Osaka-shi, Osaka 530-0001 (JP); C.I. TAKIRON Corporation, Kita-Ku Osaka-Shi Osaka 530-0001 (JP)
(72) Inventor: MORITA, Yoshinobu, Osaka-shi Osaka 530-0001 (JP); KUROKAWA, Yuji, Osaka-shi Osaka 530-0001 (JP); HASHIMOTO, Takahiro, Osaka-shi Osaka 530-0001 (JP)
(74) Representative: Hoffmann Eitle
(86) International application number: PCT/JP2014/059197
(87) International publication number: WO 2014/157641

(56) References cited:
- WO-A1-95/09725
- JP-A- H07 150 625
- JP-A- 2006 247 861
- JP-A- 2006 256 212
- JP-A- 2006 316 539
- JP-A- 2007 085 031

## Description

### Technical Field

The present invention relates to a slide jig for connecting face materials and a method of laying a face material using the slide jig for connection.

### Background Art

In the related art, as a structure of repairing existing pipes such a deteriorated sewer pipe, there are numerous proposals regarding the structure of repairing existing pipes, in which an inner face of the existing pipe is entirely covered with an inner lining member (for example, refer to Patent Document 1 and Patent Document 2).

Above all, Patent Document 1 discloses a structure in which works are carried out by using a channel facility repairing block body that is plastically and integrally formed with an inner face plate constituting an inner circumferential face and an outer circumferential face standing at a circumferential edge of the inner face plate, which constitute a pipe-shaped body or a polygonal or horseshoe-like tubular body when being assembled. In addition, Patent Document 2 discloses another structure in which a hollow frame-shaped reinforcement member substantially along the inner face of the existing pipe line is disposed in the existing pipe line, and a plurality of the inner face members are continuously attached and assembled in tubular shapes in each of a tube-length direction and a circumferential direction of the existing pipe line inside the reinforcement member. Moreover, the inner face members adjacent in the tube-length direction of the existing pipe line are mutually joined by the inner face material connecting member which is disposed across both the inner face members in a state where the end faces of the inner face members abut on each other, and a curable filler material fills the space between the inner face members and the inner face of the existing pipe line.

However, in the structure disclosed in Patent Document 1, a synthetic resin made block body used therein requires an expensive die, and thus, it takes a high cost and it is significantly troublesome to assemble numerous block bodies. In addition, in the structure disclosed in Patent Document 2, as the length to repair the existing pipe line is increased, the problems in transportation, production facility, and an installation space at a production site are solved when using the inner face members and the fitting members that are connected to each other in the tube-length direction. However, when disposing the hollow frame-shaped reinforcement member inside the existing pipe line, since the reinforcement member is constituted of numerous members, it is significantly troublesome to assemble the reinforcement member inside the existing pipe line. In addition, there are numerous inner face members, and it is troublesome to cause the inner face members to engage with the fitting members which are numerous similar to the inner face members.

Meanwhile, taking the foregoing circumstances into consideration, as a structure of repairing existing pipes, in which economical members are used, the troublesome assembling process is omitted so as to simplify the installation work, and durability is retained for a long period of time after the completion of the work, there is a proposal (for example, refer to Patent Document 3) regarding a structure which is constituted of rigid rings that are arranged at predetermined intervals in a pipe axis direction along the circumferential direction of an inner circumferential face of the existing pipe, rigid straight members which have notches formed at predetermined intervals on a central side of the existing pipe and which are arranged at predetermined intervals in the circumferential direction of the rigid rings, in the pipe axis direction so as to be laid across inside the rigid rings, and synthetic resin made belt-like inner face materials that have protrusions which correspond to the notches of the rigid straight members. The synthetic resin made inner face materials are successively arranged with no clearance along the circumferential direction of the inner circumferential face of the existing pipe and the pipe axis direction by fitting the protrusions of the synthetic resin made inner face materials to the notches of the rigid straight members, and a curable filler material fills a space generated between the existing pipe and the synthetic resin made inner face materials. However, since the synthetic resin made inner face materials are arranged along the circumferential direction of the inner circumferential face of the existing pipe, the inner face materials cannot be arranged in a highly accurate manner so as not to generate unevenness in the pip axis direction. Thus, there is a problem in that as the length to repair the existing pipe line is increased, it is troublesome to arrange the inner face material.

Taking the foregoing circumstances into consideration, the applicant has previously proposed an inner face material and an inner layer structure of a pipe using the inner face material, in which installation work of the inner face material is simplified and durability is retained for a long period of time after the completion of the work (Japanese Patent Application No. 2012-217387).

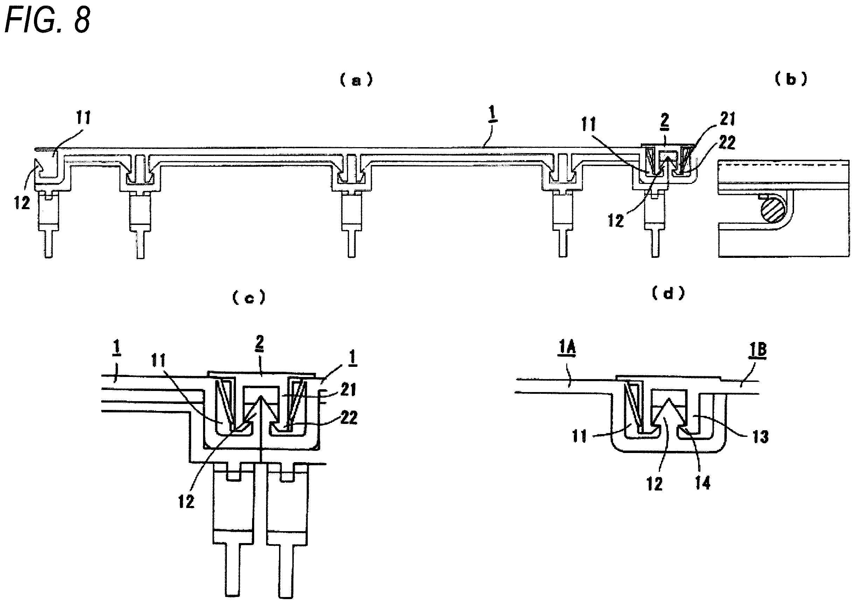

The inner layer structure of a pipe using the inner face material includes: (1) a structure, illustrated in Figs. 8(a) to 8(c), in which belt-like inner face materials 1 which are arranged side by side in a width direction are connected together by respectively fitting face material fitting claws 12, which are respectively formed in grooves 11 that are respectively formed at end portions of the inner face materials 1 in the width direction, to face material connecting member fitting claws 22 which are oppositely formed in protrusions 21 that are formed so as to be parallel to each other and formed in the inner face material connecting member 2 arranged across the end portions of the inner face materials 1 in the width direction; and (2) another structure, illustrated in Fig. 8(d), in which belt-like inner face materials 1A and 1B which are arranged side by side in the width direction are connected to each other by fitting the face material fitting claw 12, which is formed in the groove 11 that is formed at the end portion of one inner face material 1A in the width direction, to face material fitting claws 14 which is formed in the protrusions 13 that are formed at the end portion of the other inner face material 1B in the width direction. In the case (1), there are problems in that it is troublesome to perform the work of connecting the inner face materials 1 together by respectively fitting face material fitting claws 12 of the inner face material 1 to face material connecting member fitting claws 22 of the inner face material connecting member 2, and it is difficult to ensure reliability of the fitting work between the face material fitting claw 12 and the face material connecting member fitting claw 22. In addition, similarly, in the case (2), there are problems in that it is troublesome to perform the work of connecting the inner face materials 1A and 1B together by fitting the face material fitting claws 12 and 14 to each other in the inner face materials 1A and 1B, and it is difficult to ensure reliability of the fitting work between the face material fitting claws 12 and 14.

The similar problems commonly exist in a structure in which planar members (in the specification, referred to as simply "the face materials" including the above-described inner face materials) are connected together by causing the fitting claws to fit each other, such as a structure, for example, in which the belt-like inner face materials which are arranged side by side in the width direction are connected together by respectively fitting the fitting claws, which are respectively formed in the grooves that are respectively formed at the end portions in the width direction of the inner face materials, to the fitting claws which are oppositely formed in the protrusions which are formed so as to be parallel to each other and formed in the inner face material connecting member arranged across both the end portion in the width direction of the inner face material, in an inner wall face structure (for example, refer to Patent Document 4) of a tank having a concrete structure, in addition to an inner layer structure of a pipe using the inner face material.

### Citation List

### Patent Documents

Patent Document 1: JP-A-2003-286742
Patent Document 2: JP-A-2002-310378
Patent Document 3: JP-A-2006-316539
Patent Document 4: JP-A-7-150625

Further related prior art may be found in WO 95/09725 A1 being directed to a method and device for lining a tube.

### Summary of Invention

### Problems to Be Solved by Invention

In consideration of the above-described problems in the related art in a structure in which face materials are connected together by causing fitting claws to fit each other, the present invention aims to provide a slide jig for connecting face materials and a method of laying a face material using the slide jig for connection, in which the face materials can be easily connected together while causing the fitting claws to reliably fit together.

### Means for Solving the Problems

In order to achieve the above object, a slide jig for connecting face materials according to a first aspect of the present invention is a slide jig for connecting face materials, which is used to connect two belt-like face materials arranged side by side in a width direction together by fitting face material fitting claws to face material connecting member fitting claws, respectively, the fitting face material fitting claws being respectively formed in grooves that are respectively formed at end portions of the two face materials in the width direction, the which are formed so as to have a gap therebetween in a face material connecting member arranged across the end portions of the two face materials in the width direction,
characterized in that
the slide jig comprises: a support portion that is inserted into a groove of a face material; and a pressing portion that presses a surface of the face material connecting member, which are integrated with a joint portion, and
the support portion is provided so as to be positioned in a front of the jig in a slide direction, and the pressing portion is provided so as to be positioned in a rear of the jig in the slide direction.

In this aspect, the support portion may be extended from the joint portion toward the front of the jig in the slide direction, and the pressing portion may be extended from the joint portion toward the rear of the jig in the slide direction.

A rear end portion of the pressing portion of the jig in the slide direction may be positioned in a rear of a rear end portion of the support portion of the jig in the slide direction.

Provided is a protrusion guide portion that is provided between the support portion and the pressing portion so as to be inserted between the protrusions which are formed in the face material connecting member.

The protrusion guide portion may be provided so as to incline in a direction of entering the groove which is formed at the end portion of the face material in the width direction, toward the rear of the jig in the slide direction.

The protrusion guide portion may control the protrusions which are formed in the face material connecting member so as to pressedly widen the gap therebetween.

The protrusion guide portion may be formed in a tip-split state toward the rear of the jig in the slide direction, and the face material fitting claws which are respectively formed in both the face materials may be adapted to enter the tip-split space therebetween.

A method of laying a face material according to the present invention is characterized by comprising, by using the above slide jig for connection, connecting the face materials together by fitting the face material fitting claws of the face materials to the face material connecting member fitting claws of the face material connecting member, respectively, so as to lay the face materials on an inner circumferential face of a pipe.

In order to achieve the same object, a slide jig for connecting face materials according to a second aspect of the present invention is a slide jig for connecting face materials, which is used to connect two belt-like face materials arranged side by side in a width direction together by fitting one face material fitting claw to another face material fitting claw, the one face material fitting claw being formed in a groove which is formed at an end portion of one face material in the width direction between the two belt-like face, the other face material fitting claw being formed at an end portion of the other face material in the width direction, characterized in that
the slide jig comprises: a support portion that is inserted into the groove of the one face material; and a pressing portion that presses a surface of the other face material, which are integrated with via a joint portion,
the support portion is provided so as to be positioned in a front of the jig in a slide direction, and the pressing portion is provided so as to be positioned in a rear of the jig in the slide direction.

In this aspect, the support portion may be extended from the joint portion toward the front of the jig in the slide direction, and the pressing portion may be extended from the joint portion toward the rear of the jig in the slide direction.

A rear end portion of the pressing portion of the jig in the slide direction may be positioned in a rear of a rear end portion of the support portion of the jig in the slide direction.

Provided is a protrusion guide portion that is provided between the support portion and the pressing portion so as to abut on the protrusion which is formed in the other face material.

The protrusion guide portion may be provided so as to incline in a direction of entering the groove which is formed at the end portion of the one face material in the width direction, toward the rear of the jig in the slide direction.

The protrusion guide portion may control the protrusion which is formed in the other face material so as to displace the protrusion in a direction opposite to the face material fitting claw that is formed in the one face material.

The protrusion guide portion may be formed in a tip-split state toward the rear of the jig in the slide direction, and the face material fitting claw which is formed in the one face material may be adapted to enter the tip-split space therebetween.

A method of laying a face material according to the present invention is characterized by comprising, by using the above slide jig for connection, connecting the face materials together by causing the face material fitting claws of the face materials to fit each other so as to lay the face materials on an inner circumferential face of a pipe.

### Advantageous Effects of Invention

According to a slide jig for connecting face materials and a method of laying a face material using the slide jig for connection in the first aspect of the present invention (hereinafter, referred to as "the first invention"), when connecting the face materials together by respectively the face material fitting claws of the face materials to the face material connecting member fitting claws of the face material connecting member, the support portion that is inserted into the groove of one face material and the pressing portion that presses the surface of the other face material are integrated with the joint portion. The support portion is provided so as to be positioned in the front of the jig in the slide direction, and the pressing portion is provided so as to be positioned in the rear of the jig in the slide direction, for example, the support portion is extended from the joint portion toward the front of the jig in the slide direction, and the pressing portion is extended from the joint portion toward the rear of the jig in the slide direction. Thus, it is possible to easily connect the face materials together while causing the fitting claws to reliably fit together.

In addition, according to a slide jig for connecting face materials and a method of laying a face material using the slide jig for connection of a second aspect of the present invention (hereinafter, referred to as "the second invention"), when connecting the face materials together by fitting the face material fitting claws of the face materials to each other, the support portion that is inserted into the groove of one face material and the pressing portion that presses the surface of the other face material are integrated with via the joint portion. The support portion is provided so as to be positioned in the front of the jig in the slide direction, and the pressing portion is provided so as to be positioned in the rear of the jig in the slide direction, for example, the support portion is extended from the joint portion toward the front of the jig in the slide direction, and the pressing portion is extended from the joint portion toward the rear of the jig in the slide direction. Thus, it is possible to easily connect the face materials together while causing the face material fitting claws to reliably fit together.

In addition, regarding the first invention and the second invention, the rear end portion of the pressing portion of the jig in the slide direction is positioned in a rear of the rear end portion of the support portion of the jig in the slide direction. Thus, it is possible to continuously perform a push-in operation into the groove of the protrusion of the face material connecting member or the protrusion of the face material to the position where the fitting claws reliably fit together.

In addition, regarding the first invention, between the support portion and the pressing portion, there is provided the protrusion guide portion that is inserted between the protrusions which are formed in the face material connecting member, and regarding the second invention, between the support portion and the pressing portion, there is provided the protrusion guide portion that abuts on the protrusion which is formed in the other face material. Thus, it is possible to stably control the position of the protrusion.

In addition, regarding the first invention, the protrusion guide portion is provided so as to incline in the direction of entering the groove which is formed at the end portion in the width direction of the face material toward the rear of the jig in the slide direction, and regarding the second invention, the protrusion guide portion is provided so as to incline in the direction of entering the groove which is formed at the end portion of the one face material in the width direction toward the rear of the jig in the slide direction. Thus, it is possible to cause the protrusion of the face material connecting member or the protrusion of the other face material to be drawn into the groove which is formed at the end portion in the width direction of the face material or the groove which is formed at the end portion of the one face material in the width direction, in accordance with sliding of the jig.

In addition, regarding the first invention, the protrusion guide portion controls the protrusions that are formed in the face material connecting member so as to pressedly widen the gap therebetween, and regarding the second invention, the protrusion guide portion controls the protrusion that is formed in the other face material so as to displace the protrusion in a direction opposite to the face material fitting claws which is formed in the one face material. Thus, it is possible to cause the fitting claws to more reliably fit together.

In addition, regarding the first invention, the protrusion guide portion is formed in a tip-split state toward the rear of the jig in the slide direction, and the face material fitting claws which are respectively formed in both the face materials are adapted to enter the tip-split space therebetween. Regarding the second invention, the protrusion guide portion is formed in a tip-split state toward the rear of the jig in the slide direction, and the face material fitting claw which is formed in the one face material is adapted to the tip-split space therebetween. Thus, it is possible to prevent the protrusion guide portion from interfering with the face material fitting claws which are respectively formed in the face material or the face material fitting claw which is formed in the one face material, and it is possible to control the position of the protrusion so as to cause the fitting claws to reliably fit together.

### Brief Description of Drawings

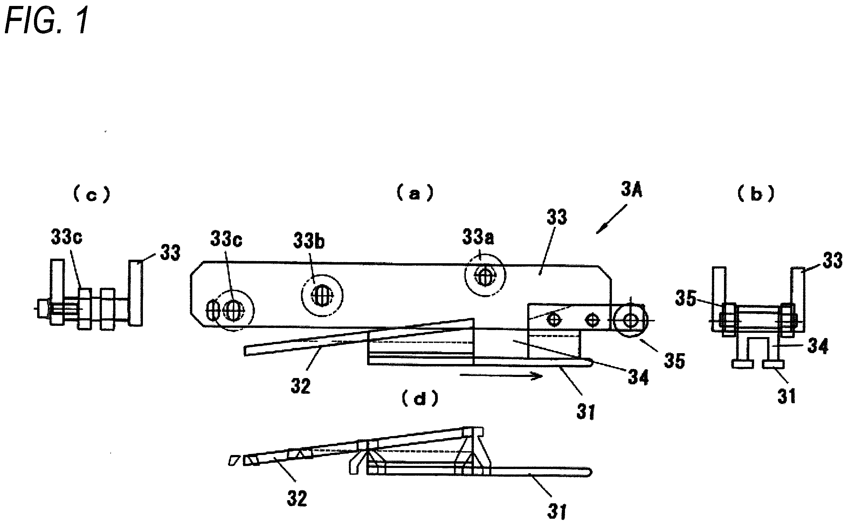

Fig. 1 illustrates a first embodiment of a slide jig for connecting face materials in the present invention. (a) is a front view, (b) is an anterior view in a slide direction of the jig, (c) is a posterior view in the slide direction of the jig, and (d) is a sectional view of a protrusion guide portion showing each of the portions thereof.

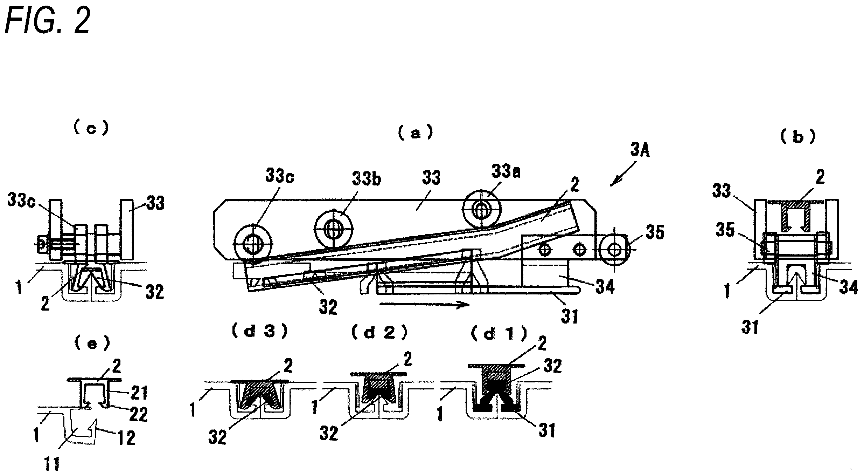

Fig. 2 is a diagram illustrating a method of laying a face material using the jig. (a) is a front view, (b) is an anterior view in the slide direction of the jig, (c) is a posterior view in the slide direction of the jig, (d1) to (d3) are sectional views of the protrusion guide portion showing each of the portions thereof, and Fig. (e) is a sectional view of the face material and a face material connecting member.

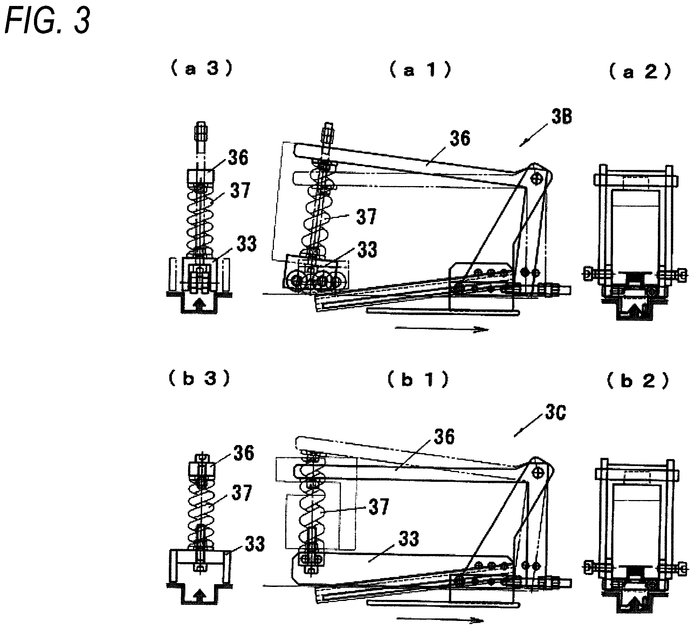

Fig. 3 illustrates a second embodiment of the slide jig for connecting face materials in the present invention. (a1) is a front view of a first aspect of the second embodiment, (a2) is an anterior view of the jig in the slide direction of the same, and (a3) is a posterior view of the jig in the slide direction of the same. (b1) is a front view of a second aspect of the second embodiment, (b2) is an anterior view of the jig in the slide direction of the same, and (b3) is a posterior view of the jig in the slide direction.

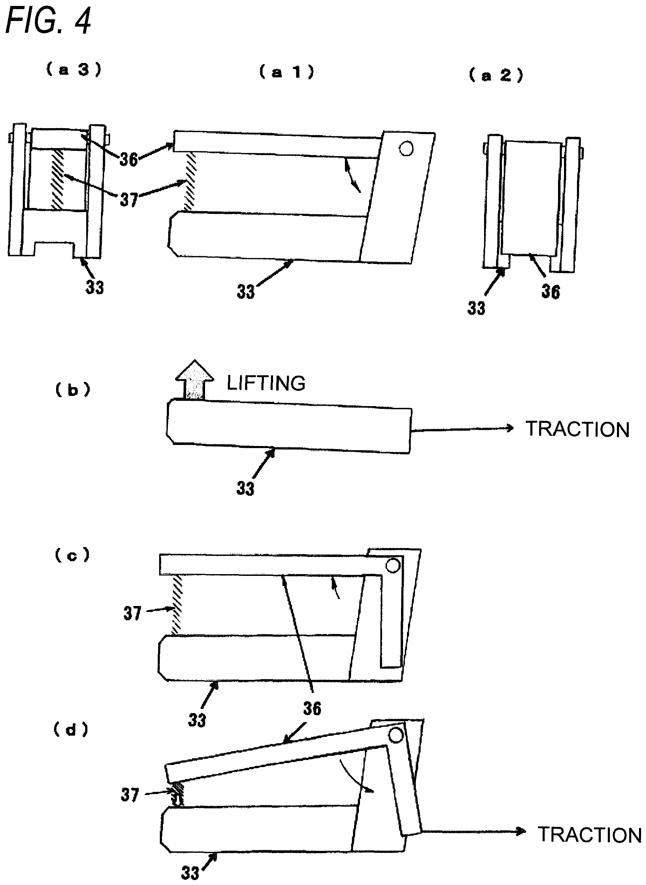

Fig. 4 schematically illustrates the second aspect of the second embodiment of the slide jig for connecting face materials in the present invention. (a1) is a front view of the second aspect of the second embodiment, (a2) is an anterior view of the jig in the slide direction, and (a3) is a posterior view of the jig in the slide direction. (b) is a diagram illustrating a lifting phenomenon. (c) is a diagram illustrating the jig before traction. (d) is a diagram illustrating of the jig in the midst of traction.

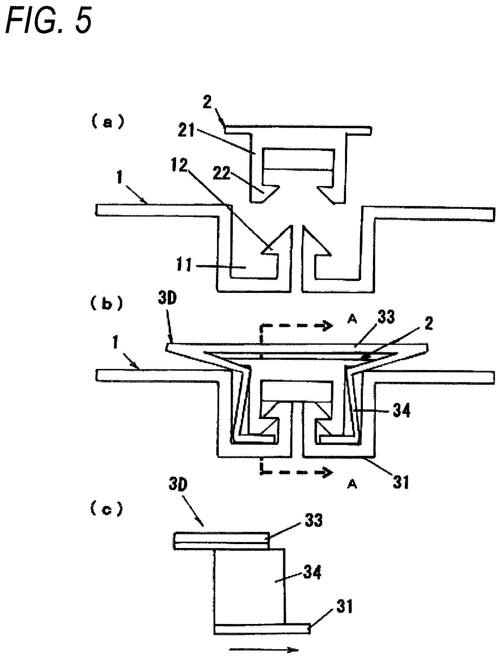

Fig. 5 schematically illustrates a third embodiment of the slide jig for connecting face materials in the present invention. (a) is a sectional view illustrating a state before the face materials and the face material connecting member are assembled, (b) is a sectional view illustrating a state where the face materials and the face material connecting member are assembled by the jig, and (c) is a sectional view taken along line A-A in (b).

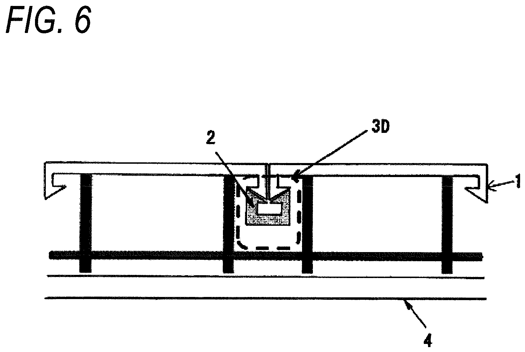

Fig. 6 is a sectional view illustrating an example in which the face material connecting member is disposed between the face materials, and the face materials and the face material connecting member are assembled, from below.

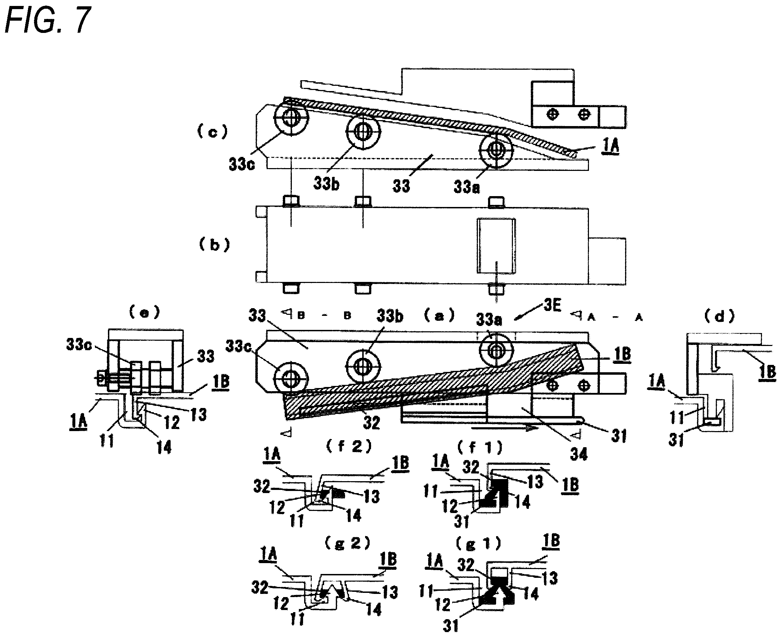

Fig. 7 illustrates a fourth embodiment of the slide jig for connecting face materials in the present invention. (a) is a front view illustrating the method of laying a face material using the jig of the same, (b) is a plan view of the same, (c) is a posterior view of the same, (d) is an anterior view of the jig in the slide direction, (e) is a posterior view of the jig in the slide direction, (f1) and (f2) are sectional views of the protrusion guide portion showing each of the portions thereof, (g1) and (g2) are sectional views of the protrusion guide portion showing each of the portions thereof in an example in which face material fitting claws are differently shaped.
Fig. 8 illustrates a state where the face materials and the face material connecting member are assembled. (a) is a diagram illustrating a pipe in a longitudinal sectional direction, (b) is a diagram illustrating the pipe in a lateral sectional direction (the face materials and the face material connecting member not illustrated), (c) is a diagram illustrating the main portion of the pipe in the longitudinal sectional direction, and (d) is a diagram illustrating the main portion of the pipe in the longitudinal sectional direction in another example.

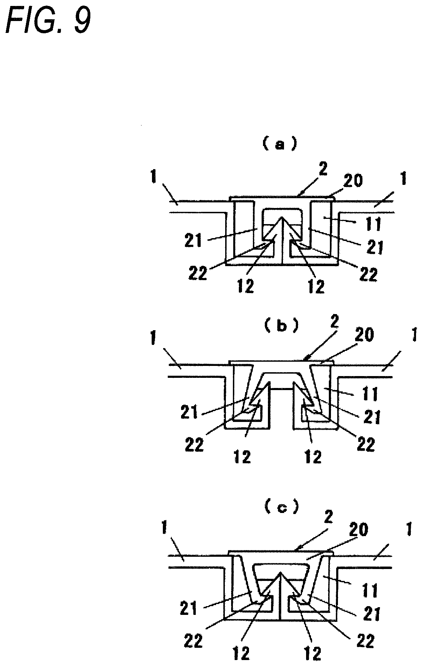

Fig. 9 is a diagram illustrating an example in which face material connecting member fitting claws of the face material connecting member are differently shaped.

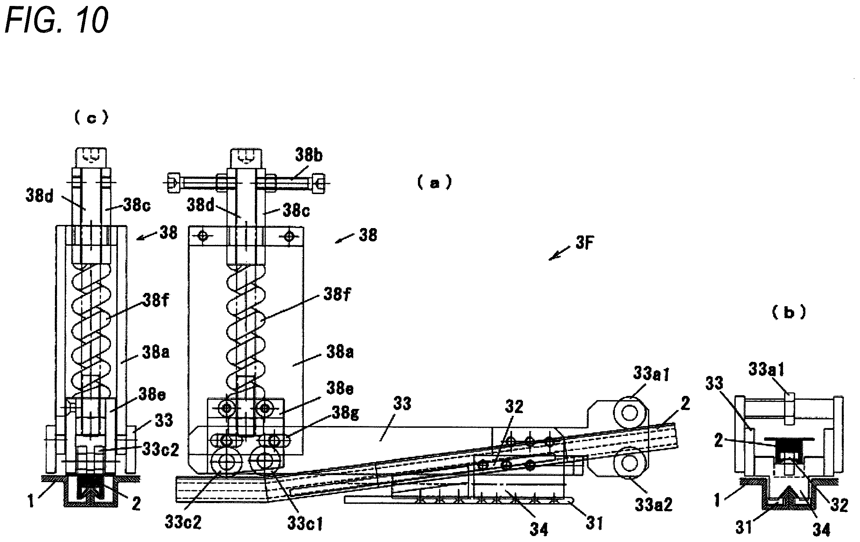

Fig. 10 illustrates a fifth embodiment of the slide jig for connecting face materials in the present invention. (a) is a front view, (b) is an anterior view of the jig in the slide direction, and (c) is a posterior view of the jig in the slide direction.

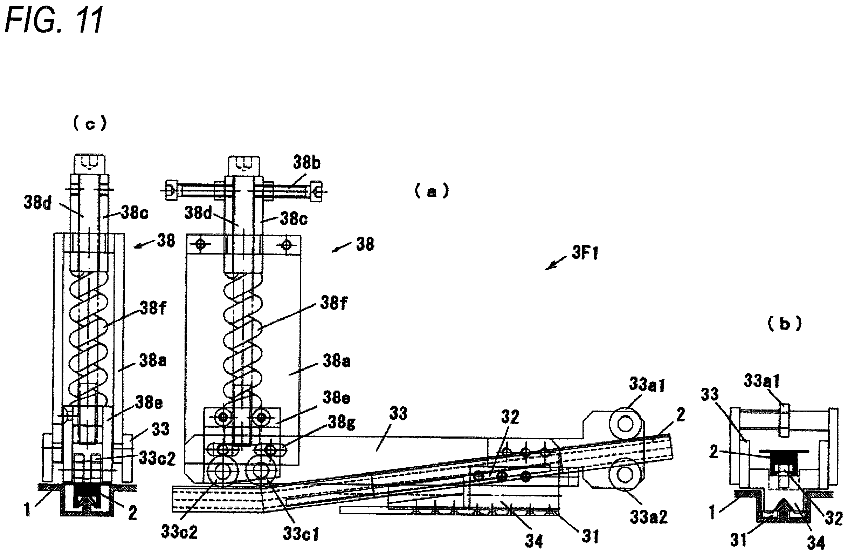

Fig. 11 illustrates a first modification aspect of the fifth embodiment of the slide jig for connecting face materials in the present invention. (a) is a front view, (b) is an anterior view of the jig in the slide direction, and (c) is a posterior view of the jig in the slide direction.

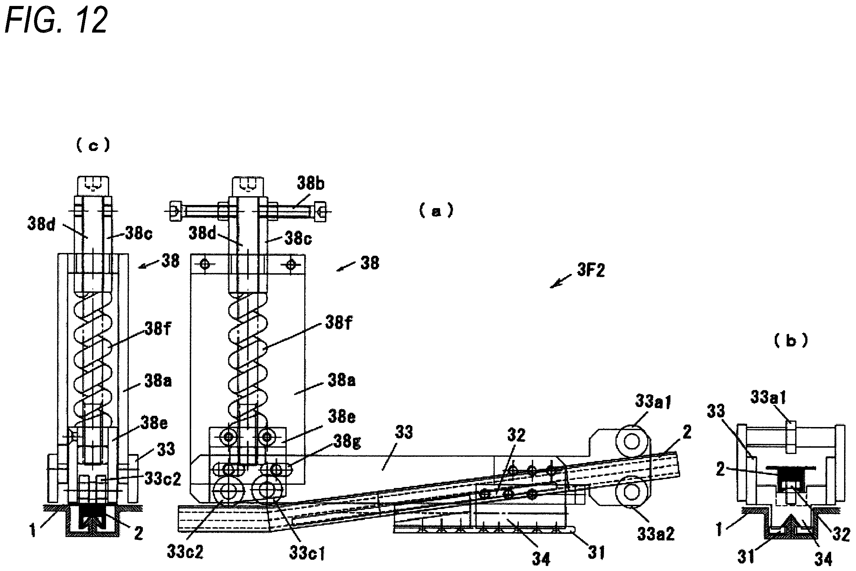

Fig. 12 illustrates a second modification aspect of the fifth embodiment of the slide jig for connecting face materials in the present invention. (a) is a front view, (b) is an anterior view of the jig in the slide direction, and (c) is a posterior view of the jig in the slide direction of the jig.

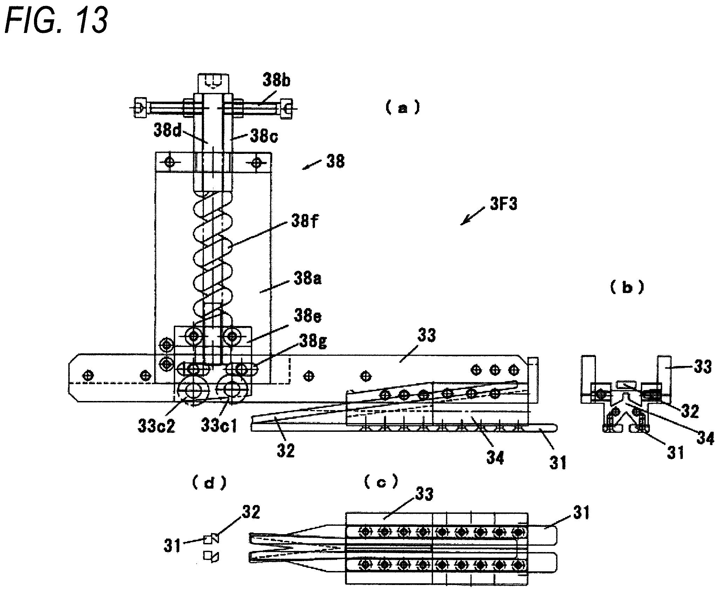

Fig. 13 illustrates a third modification aspect of the fifth embodiment of the slide jig for connecting face materials in the present invention. (a) is a front view, (b) is an anterior view of the jig in the slide direction of the jig, (c) is a bottom view of the main portion, and (d) is a posterior view of the same.

### Embodiments for Carrying Out the Invention

Hereinafter, embodiments of a slide jig for connecting face materials and a method of laying a face material using the slide jig for connection according to the present invention will be described with reference to the drawings.

### Embodiment 1

Figs. 1 to 2 illustrate a first embodiment of the slide jig for connecting face materials in the present invention.

As illustrated in Figs. 8(a) to (c), a slide jig 3A for connecting face materials (hereinafter, may also be referred to as "the jig") is used to connect belt-like inner face materials 1 (hereinafter, referred to as "the face materials 1") together, which are arranged side by side in a width direction, by respectively fitting face material fitting claws 12, which are respectively formed in grooves 11 that are respectively formed at end portions of the face materials 1 in the width direction, to face material connecting member fitting claws 22 which are oppositely formed in protrusions 21 that are formed so as to be parallel to each other and formed in an inner face material connecting member 2 (hereinafter, referred to as "the face material connecting member 2") arranged across the end portions of both the face materials 1 in the width direction. The jig 3A includes a support portion 31 that is inserted into the groove 11 of the face material 1, a protrusion guide portion 32 that is inserted between the protrusions 21 which are formed so as to be parallel to each other and formed in the face material connecting member 2, and a pressing portion 33 that presses a surface of the face material connecting member 2, which are integrated with a joint portion 34 in the aforementioned order. The support portion 31 extends from the joint portion 34 toward the front of the jig 3A in a slide direction as indicated by the arrow in Fig. 1(a). The protrusion guide portion 32 and the pressing portion 33 extend from the joint portion toward the rear of the jig 3A in the slide direction.

Here, the protrusions 21, which are formed so as to be parallel to each other and formed in the face material connecting member 2, can be formed so as to be perpendicular to a surface material 20 constituting the face material connecting member 2 as illustrated in Fig. 9(a), and can be formed so as to incline as illustrated in Figs. 9(b) and (c), as long as the protrusions 21 are formed so as to have a certain gap therebetween.

Then, when the slide jig 3A for connecting face materials is slid in the slide direction, the face material connecting member 2 is pressed downward successively by rotary members 33a, 33b, and 33c. In other words, the rotary members 33a, 33b, and 33c are constituted so as to be successively shifted in position from the upper position to the lower positions toward the rear in a traveling direction in Fig. 1(a).

Accordingly, friction resistance of the pressing portion 33 with respect to the face material connecting member 2 can be reduced, and the jig 3A can slide smoothly. Thus, the face material connecting member 2 is pressed downward.

In addition, the protrusion guide portion 32 is provided in order to stably control the position of the protrusions 21 of the face material connecting member 2. The protrusion guide portion 32 is provided so as to incline in a direction of entering the groove 11 which is formed at the end portion of the face material 1 in the width direction, toward the rear of the jig 3A in the slide direction.

Accordingly, the protrusions 21 of the face material connecting member 2 can be drawn into the groove 11 which is formed at the end portion of the face material 1 in the width direction, in accordance with sliding of the jig 3A.

In addition, the protrusion guide portion 32 is formed so as to control two protrusions 21 of the face material connecting member 2 so as to pressedly widen a gap therebetween. Specifically, the protrusion guide portion 32 is formed so as to be wide open in a tip-split state toward the rear of the jig 3A in the slide direction, and the face material fitting claws 12 which are respectively formed in both the face materials 1 enter between the tip-split portion of the protrusion guide portion 32.

Accordingly, the protrusion guide portion 32 can be prevented from interfering with the face material fitting claws 12 which are respectively formed in the face materials 1. Thus, the positions of the protrusions 21 can be controlled so as to cause the face material fitting claws 12 and the face material connecting member fitting claws 22 to reliably fit each other.

Then, two support portions 31 included in the jig 3A are inserted into each of the grooves 11 in the face materials 1 which are arranged side by side. Since the gap (distance) between the two support portions 31 substantially coincides with the measurement of the doubled thickness of a base portion of the face material fitting claws 12, when the support portions 31 are respectively inserted into the grooves 11 of the face materials 1 which are arranged side by side, the two face material fitting claws 12 slip therein with no clearance (or at a given clearance measurement). In this manner, when the face material fitting claws 12 slip therein with no clearance, the face material connecting member 2 easily fits the face material fitting claws 12 from thereabove.

In addition, when the support portions 31 are respectively inserted into the grooves 11 of the face materials 1 which are arranged side by side, the support portion 31 is positioned at the base portion of an expansion portion of the face material fitting claws 12, and the support portion 31 cannot be displaced upward in Fig. 2(b) due to the expansion portion of the face material fitting claws 12. Accordingly, the jig 3A can function as a member of pressing force for pressing the face material connecting member 2 downward from above.

Subsequently, the pressing portion 33 included in the jig 3A is a portion for pressing the face material connecting member 2 downward from above. As the face material connecting member 2 is pressed downward from above via the rotary members 33a, 33b, and 33c which are provided in the pressing portion 33, pressing force can be unlikely to have resistance (friction resistance) with respect to the jig 3A in the traveling direction. Then, it is preferable that at least the rotary member 33c which is one of the rotary members 33a, 33b, and 33c is arranged in the rear of the trailing end of the protrusion guide portion 32. Accordingly, a push-in operation for the protrusions 21 (the face material connecting member fitting claws 22) of the face material connecting member 2 into the grooves 11 can be performed continuously to the position where the face material fitting claws 12 and the face material connecting member fitting claws 22 reliably fit (engage) each other.

In addition, in the slide jig 3A for connecting face materials, a rotary member 35 which abuts on the surface of the face material 1 and rotates is arranged at the front of the jig 3A in the slide direction.

Accordingly, friction resistance of the jig 3A with respect to the face material 1 can be reduced, and the jig 3A can slide smoothly.

Incidentally, the slide jig 3A for connecting face materials can slide manually by a worker. Additionally, a traction portion (not illustrated) can be provided at the front of the jig 3A in the slide direction, and a traction cable (not illustrated) is connected to the traction portion. Then, the jig 3A is caused to slide through traction performed from the front of the jig 3A by a worker or a work machine such as a winch. Furthermore, the jig 3A can slide by being pushed from the rear via a suitable operation member.

Subsequently, a method of laying the face material 1 using the slide jig 3A for connecting face materials will be described.

As illustrated in Fig. 2, the face material connecting member 2 is disposed between the belt-like face materials 1 (the face materials 1 may be arranged while being in contact with each other in the width direction, or may be arranged allowing clearance therebetween, when connection is completed) which are arranged side by side in the width direction.

In this case, the support portion 31 is inserted into the groove 11 of the face material 1, and the protrusion guide portion 32 is inserted between the protrusions 21 which are formed so as to be parallel to each other in the face material connecting member 2. Simultaneously, the jig 3A is installed so as to cause the pressing portion 33 to press the surface of the face material connecting member 2.

Accordingly, the face material connecting member 2 inclines in the direction of entering the face material 1 toward the rear of the jig 3A in the slide direction, thereby being introduced therein. Then, due to the support portion 31, the face material fitting claws 12 respectively formed in the face materials 1 are positioned together. Then, it is possible to fit the face material connecting member fitting claws 22 easily. In addition, the support portion 31 functions as a reaction force member in a case where the face material fitting claws 12 and the face material connecting member fitting claws 22 fit each other.

In this state, as illustrated in Figs. 2(dl) to 2(d3), as the jig 3A is caused to slide, the protrusions 21 of the face material connecting member 2 are deformed in a direction of being wide open by the protrusion guide portion 32, and the protrusions 21 of the face material connecting member 2 are introduced into the grooves 11. Then, the face materials 1 are connected together by fitting the face material fitting claws 12, which are respectively formed in the grooves 11 that are respectively formed at the end portions of the face materials 1 in the width direction, to the face material connecting member fitting claws 22 which are oppositely formed in the protrusions 21 which are formed so as to be parallel to each other and formed in the face material connecting member 2 arranged across the end portions of both the face materials 1 in the width direction.

In this manner, the face materials 1 can be easily connected together by using the slide jig 3A for connecting face materials while causing the face material fitting claws 12 and the face material connecting member fitting claws 22 to reliably and respectively fit together.

### Embodiment 2

Incidentally, in a case where the traction portion (not illustrated) is provided at the front of the slide jig 3A for connecting face materials in the slide direction, the traction cable (not illustrated) is connected to the traction portion, and then, the jig 3A is caused to slide through traction performed from the front of the jig 3A by a worker or a work machine such as a winch, for example, when the traction portion is provided at the front of the pressing portion 33, and the jig 3A is subjected to traction via the pressing portion 33 as illustrated in Fig. 4(b), the rear of the pressing portion 33 is lifted. Therefore, there is a possibility that the surface of the face material connecting member 2 cannot be sufficiently pressed by the pressing portion 33, and thus, fitting of the face material fitting claws 12 and the face material connecting member fitting claws 22 becomes unreliable.

In order to prevent the lifting phenomenon, as seen in a first aspect and a second aspect of a second embodiment of the slide jig for connecting face materials in the present invention illustrated in Figs. 3 and 4, it is possible to cause slide jigs 3B and 3C for connecting face materials to be supported by an intermediate portion of an L-shaped traction member 36 in an oscillatable manner so that one end side of the traction member 36 can be the traction portion, and the other end side thereof can be attached to the pressing portion 33 via a spring 37.

Accordingly, as illustrated in Fig. 4(d), when the jigs 3B and 3C are subjected to traction, due to downward force generated by the other end side of the traction member 36 when being lowered, it is possible to prevent the lifting phenomenon by urging the pressing portion 33 via the spring 37.

Other constitutions and operations of the slide jigs 3B and 3C for connecting face materials of the present embodiment are similar to those of the slide jig 3A for connecting face materials of the first embodiment.

### Embodiment 3

Fig. 5 illustrates a third embodiment of the slide jig for connecting face materials in the present invention.

As illustrated in Figs. 8(a) to (c), a slide jig 3D for connecting face materials is used to connect the belt-like inner face materials 1 (hereinafter, referred to as "the face material 1") together, which are arranged side by side in the width direction by respectively fitting the face material fitting claws 12, which are respectively formed in the grooves 11 that are respectively formed at the end portions of the face materials 1 in the width direction, to the face material connecting member fitting claws 22 which are oppositely formed in the protrusions 21 that are formed so as to be parallel to each other and formed in the inner face material connecting member 2 (hereinafter, referred to as "the face material connecting member 2") arranged across the end portions of both the face materials 1 in the width direction. The jig 3D includes the support portion 31 that is inserted into the groove 11 of the face material 1 and the pressing portion 33 that presses the surface of the face material connecting member 2, which are integrated with the joint portion 34 in the aforementioned order. The support portion 31 extends from the joint portion 34 toward the front of the jig 3D in the slide direction as indicated by the arrow in Fig. 5(c). The pressing portion 33 extends from the joint portion toward the rear of the jig 3A in the slide direction.

In the slide jig 3D for connecting face materials of the present embodiment, the structure of the jig is simplified by omitting the protrusion guide portion 32 of the slide jig 3A for connecting face materials of the first embodiment. Other constitutions and operations thereof are similar to those of the slide jig 3A for connecting face materials of the first embodiment except for the point regarding the protrusion guide portion 32.

Incidentally, in each of the above-described embodiments, descriptions are given regarding the examples in which the face materials 1 are connected together while the face material fitting claws 12 and the face material connecting member fitting claws 22 are caused to respectively fit each other by disposing the face material connecting member 2 from above in Fig. 5, for example, between the belt-like face materials 1 which are arranged side by side in the width direction. However, by using the slide jig 3D for connecting face materials of the third embodiment and by causing the jig 3D to be subjected to traction so as to slide, for example, as illustrated in Fig. 6, the face materials 1 can be connected together while the face material fitting claws 12 and the face material connecting member fitting claws 22 are caused to respectively fit each other by disposing the face material connecting member 2 from below in Fig. 6, for example, between the belt-like face materials 1 (a lower space formed between the face materials 1 and an existing pipe 4) which are arranged side by side in the width direction.

### Embodiment 4

Fig. 7 illustrates a fourth embodiment of the slide jig for connecting face materials in the present invention.

As illustrated in Fig. 8(d), a slide jig 3E for connecting face materials is used to connect belt-like inner face materials 1A and 1B (hereinafter, referred to as "the face materials 1A and 1B") together, which are arranged side by side in the width direction by fitting the face material fitting claw 12, (regarding the shape of the face material fitting claw 12, it is possible to adopt a claw in which a projection portion is formed on one side or both sides (refer to Figs. 7(g1) to (g2) and 8(d))) which is formed in the groove 11 that is formed at the end portion of one face material 1A in the width direction, to a face material fitting claw 14 (regarding the shapes of a protrusion 13 and the face material fitting claw 14, it is possible to adopt the protrusion and the claw which are formed on one side corresponding to the face material fitting claw 12 and on corresponding two sides (refer to Figs. 7(gl) to 7(g2) and 8(d))) which is formed in the protrusion 13 that is formed at the end portion of the other face material 1B in the width direction. The jig 3E includes the support portion 31 that is inserted into the groove 11 of the one face material 1A, the protrusion guide portion 32 that abuts on the protrusion 13 which is formed so as to be parallel to the other face material 1B, and the pressing portion 33 that presses the surface of the other face material 1B, which are integrated with the joint portion 34 in the aforementioned order. The support portion 31 extends from the joint portion toward the rear of the jig 3E in the slide direction as indicated by the arrow in Fig. 7(a). The protrusion guide portion 32 and the pressing portion 33 extend from the joint portion 34 toward the front of the jig 3E in the slide direction.

Then, in the slide jig 3E for connecting face materials, the pressing portion 33 is constituted of the rotary members 33a, 33b, and 33c which are provided so as to be successively shifted in position in a direction of pressing the other face material 1B, that is, from the upper position to the lower positions in Fig. 7(a) toward the rear of the jig 3E in the slide direction.

Accordingly, friction resistance of the pressing portion 33 with respect to the other face material 1B can be reduced, and the jig 3E can slide smoothly.

In addition, the protrusion guide portion 32 is provided in order to stably control the position of the protrusion 13 the other face material 1B. The protrusion guide portion 32 is provided so as to incline in the direction of entering the groove 11 which is formed at the end portion of the one face material 1A in the width direction, toward the rear of the jig 3E in the slide direction.

Accordingly, the protrusion 13 of the other face material 1B can be drawn into the groove 11 which is formed at the end portion of the one face material 1A in the width direction, in accordance with sliding of the jig 3E.

In addition, the protrusion guide portion 32 is formed so as to control the protrusion 13 that is formed in the other face material 1B so as to displace the protrusion 13 to a side opposite to the face material fitting claw 12 which is formed in the one face material 1A. Specifically, the protrusion guide portion 32 is formed so as to be wide open in a tip-split state toward the rear of the jig 3E in the slide direction, and the face material fitting claw 12 which is formed in the one face material 1A enters the space therebetween.

Accordingly, the protrusion guide portion 32 can be prevented from interfering with the face material fitting claw 12 which is formed in the one face material 1A. Thus, the position of the protrusion 13 can be controlled so as to cause the face material fitting claws 12 and 14 to reliably fit each other.

Then, one support portion 31 included in the jig 3E is inserted into the groove 11 of the one face material 1A. When the support portion 31 is inserted into the groove 11 of the face material 1A, the support portion 31 is positioned at the base portion of the expansion portion of the face material fitting claw 12, and the support portion 31 cannot be displaced upward in Fig. 7(d) due to the expansion portion of the face material fitting claw 12. Accordingly, the jig 3E can function as a member of pressing force for pressing the face material connecting member 2 downward from above.

Subsequently, the pressing portion 33 included in the jig 3E is a portion for pressing the other face material 1B downward from above. As the other face material 1B is pressed downward from above via the rotary members 33a, 33b, and 33c which are provided in the pressing portion 33, pressing force can be unlikely to have resistance (friction resistance) with respect to the jig 3E in the traveling direction. Then, it is preferable that at least the rotary member 33c which is one of the rotary members 33a, 33b, and 33c is arranged in the rear of the trailing end of the protrusion guide portion 32. Accordingly, a push-in operation for the protrusion 13 (the face material fitting claw 14) of the other face material 1B into the groove 11 can be performed continuously to the position where the face material fitting claws 12 and 14 reliably fit (engage) each other.

Subsequently, a method laying the face materials 1A and 1B using the slide jig 3E for connecting face materials will be described.

As illustrated in Fig. 7, the other face material 1B is disposed along the one belt-like face materials 1A, which are arranged side by side in the width direction.

In this case, the support portion 31 is inserted into the groove 11 of the one face material 1A, and the protrusion guide portion 32 is inserted so as to abut on the protrusion 13 of the other face material 1B, respectively. Moreover, the jig 3E is installed so as to cause the pressing portion 33 to press the surface of the other face material 1B.

Accordingly, the protrusion 13 and the face material fitting claw 14 of the other face material 1B are installed so as to incline in the direction of entering the groove 11 of the one face material 1 toward the rear of the jig 3E in the slide direction.

In this state, as illustrated in Figs. 7 (f1) to 7(f2) (Figs. 7(g1) to 7(g2)), as the jig 3E is caused to slide, the protrusion 13 of the other face material 1B is deformed by the protrusion guide portion 32 so as to be displaced in a direction opposite to the face material fitting claw 12 which is formed in the one face material 1A. Then, the face materials 1A and 1B are connected together by fitting the face material fitting claw 12, which is formed in the groove 11 that is formed at the end portion of the one face material 1A in the width direction, to the face material fitting claw 14 of the protrusion 13 that is formed in the other face material 1B.

In this manner, the face materials 1A and 1B can be easily connected together by using the slide jig 3E for connecting face materials while causing the face material fitting claws 12 and 14 to reliably fit together.

Other constitutions and operations of the slide jig 3E for connecting face materials of the present embodiment are similar to those of the slide jig 3A for connecting face materials of the first embodiment.

### Embodiment 5

Fig. 10 illustrates a fifth embodiment of the slide jig for connecting face materials in the present invention.

In order to prevent the above-described lifting phenomenon and to be able to reliably perform a push-in operation of the protrusion 21 of the face material connecting member 2 (the face material connecting member fitting claws 22) into the groove 11, in a slide jig 3F for connecting face materials, the pressing portion 33 is provided with a pressing mechanism 38 that urges rotary members 33cl and 33c2 downward, which is provided in the pressing portion 33.

The pressing mechanism 38 is constituted of a support rack 38a which stands in the pressing portion 33, a lifting and lowering tube 38c which is screwed at an upper portion of the support rack 38a and is lifted and lowered through an rotative operation performed by an operation portion 38b, a support shaft 38d which is perpendicularly arranged from the lifting and lowering tube 38c, a press portion 38e which is supported so as to be able to be lifted and lowered by being loosely fit the support shaft 38d and in which the rotary members 33c1 and 33c2 are arranged, and a spring 38f which is arranged along the support shaft 38d between the lifting and lowering tube 38c and the press portion 38e.

Then, in the pressing mechanism 38, positional displacement of the lifting and lowering tube 38c is transmitted to the press portion 38e via the spring 38f by lowering the lifting and lowering tube 38c, and thus, downward urging force below the rotary members 33c1 and 33c2 can be increased. Moreover, the press portion 38e is supported by the support shaft 38d so as to be able to be lifted and lowered, and thus, the positions of the rotary members 33c1 and 33c2 are adjusted in accordance with stretching and shrinking of the spring 38f.

In addition, it is preferable that at least the rotary member 33c2 at the rear between the rotary members 33c1 and 33c2 is arranged in the rear of the trailing end of the protrusion guide portion 32. Accordingly, a push-in operation for the protrusion 21 (the face material connecting member fitting claw 22) of the face material connecting member 2 into the groove 11 can be performed continuously to the position where the face material fitting claw 12 and the face material connecting member fitting claw 22 reliably fit (engage) each other.

In addition, the pressing mechanism 38 is provided with positional adjustment mechanisms 38g so as to be able to control the position where the support rack 38a stands in the pressing portion 33.

In the present embodiment, the positional adjustment mechanisms 38g are constituted by forming long bolt insertion holes for bolts which fix the pressing portion 33 and the support rack 38a.

In addition, the slide jig 3F for connecting face materials is provided with the rotary members 33a1 and 33a2 which guide and support the face material connecting member 2 toward the front of the jig 3E of the pressing portion 33 in the slide direction.

Accordingly, the face material connecting member 2 is stably guided to the jig 3F.

Other constitutions and operations of the slide jig 3F for connecting face materials of the present embodiment are similar to those of the slide jig 3A for connecting face materials of the first embodiment.

Incidentally, in each of the embodiments, the support portion 31 that is inserted into the groove 11 of the face material 1, the protrusion guide portion 32 that is inserted between the protrusions 21 which are formed in the face material connecting member 2, and the pressing portion 33 that presses the surface of the face material connecting member 2 are integrally formed via the joint portion 34. Moreover, the support portion 31 extends from the joint portion 34 toward the front of each of the jigs 3A, 3B, 3C, 3D, 3E, and 3F in the slide direction, and the protrusion guide portion 32 and the pressing portion 33 extend from the joint portion toward the rear of each of the jigs 3A, 3B, 3C, 3D, 3E, and 3F in the slide direction. However, the integrated structure of the joint portion 34, the support portion 31, the protrusion guide portion 32, and the pressing portion 33 is not limited to the above-described structure.

For example, as a slide jig 3F1 for connection of a first modification aspect of the fifth embodiment of the slide jig for connecting face materials in the present invention illustrated in Fig. 11, the support portion 31 and the joint portion 34 can be constituted in series to the front end portion of the jig 3F1 of the support portion 31 in the slide direction (the support portion 31 is prohibited from extending from the joint portion 34 toward the front of the jig 3F1 in the slide direction).

Accordingly, strength of the support portion 31 can be improved.

In addition, as a slide jig 3F2 for connection of a second modification aspect of the fifth embodiment of the slide jig for connecting face materials in the present invention illustrated in Fig. 12, the support portion 31 and the joint portion 34 can be constitute in series to the rear end portion of the jig 3F2 of the support portion 31 in the slide direction (the support portion 31 is prohibited from extending from the joint portion 34 toward the rear of the jig 3F2 in the slide direction).

Accordingly, strength of the support portion 31 can be improved.

In addition, as a slide jig 3F3 for connection of a third modification aspect of the fifth embodiment of the slide jig for connecting face materials in the present invention illustrated in Fig. 13, the support portion 31 can be constituted in series with the rear end portion of the jig 3F3 of the protrusion guide portion 32 in the slide direction.

Accordingly, since the protrusion guide portion 32 which tends to be bent due to force received in a lateral direction is integrally formed with the support portion 31, the protrusion guide portion 32 can be prevented from bending, and the jig 3F3 can smoothly slide in the traveling direction.

Other constitutions and operations of the slide jigs 3F1, 3F2, and 3F3 for connecting face materials of the present embodiment are similar to those of the slide jig 3A for connecting face materials of the first embodiment.

Hereinbefore, the slide jig for connecting face materials and a method of laying a face material using the slide jig for connection according to the present invention have been described with reference to a plurality of the embodiments. However, the present invention is not limited to the constitutions disclosed in the above embodiments. The constitutions thereof can be appropriately changed without departing from the gist. For example, the constitution disclosed in each embodiment can be appropriately combined.

In a method of laying a face material according to the present invention, the face material not only can be laid along the axial direction of the pipe on the inner circumferential face of the pipe but also can be laid in an arbitrary form such as a spiral shape on the inner circumferential face and an inclined shape with respect to the axial direction of the pipe, for example.

### Industrial Applicability

A slide jig for connecting face materials and a method of laying a face material using the slide jig for connection according to the present invention has characteristics in which the face materials can be easily connected to each other while causing fitting claws to reliably fit together. Therefore, it is possible to be preferably used as a structure for repairing an existing pipe such as a sewer pipe for the purpose of connecting inner face materials together. In addition, it is possible to be widely used for the purpose of connecting various face materials together. For example, it is possible to be used as an inner wall face structure of a tank having a concrete structure for the purpose of connecting the inner face materials together.

### Reference Signs List

- 1: Face material (Inner face material)
- 11: Groove
- 12: Face material fitting claw
- 14: Face material fitting claw
- 2: Face material connecting member (Inner face material connecting member)
- 21: Protrusion
- 22: Face material connecting member fitting claw
- 3A, 3B, 3C, 3D, 3E, 3F, 3F1, 3F2, 3F3: Slide jig for connecting face material
- 31: Support portion
- 32: Protrusion guide portion
- 33: Pressing portion
- 38: Pressing mechanism

## Claims

1. A slide jig (3A) for connecting face materials (1), which is used to connect two belt-like face materials arranged side by side in a width direction together by fitting face material fitting claws to face material connecting member fitting claws, respectively, the fitting face material fitting claws being respectively formed in grooves that are respectively formed at end portions of the two face materials in the width direction, the face material connecting member fitting claws being oppositely formed in two protrusions which are formed so as to have a gap therebetween in a face material connecting member arranged across the end portions of the two face materials in the width direction, wherein
the slide jig comprises: a support portion (31) that is inserted into a groove of a face material; and a pressing portion (33) that presses a surface of the face material connecting member, which are integrated with a joint portion, and
the support portion is provided so as to be positioned in a front of the jig in a slide direction, and the pressing portion is provided so as to be positioned in a rear of the jig in the slide direction,
the slide jig being **characterized by** further comprising
a protrusion guide portion (32) that is provided between the support portion and the pressing portion so as to be inserted between the protrusions which are formed in the face material connecting member.

2. The slide jig for connecting face materials according to claim 1, **characterized in that** the support portion is extended from the joint portion toward the front of the jig in the slide direction, and the pressing portion is extended from the joint portion toward the rear of the jig in the slide direction.

3. The slide jig for connecting face materials according to claim 1 or 2, **characterized in that** a rear end portion of the pressing portion of the jig in the slide direction is positioned in a rear of a rear end portion of the support portion of the jig in the slide direction.

4. The slide jig for connecting face materials according to claim 1, **characterized in that** the protrusion guide portion is provided so as to incline in a direction of entering the groove which is formed at the end portion of the face material in the width direction, toward the rear of the jig in the slide direction.

5. The slide jig for connecting face materials according to claim 1 or 4, **characterized in that** the protrusion guide portion controls the protrusions which are formed in the face material connecting member so as to pressedly widen the gap therebetween.

6. The slide jig for connecting face materials according to claim 5, **characterized in that** the protrusion guide portion is formed in a tip-split state toward the rear of the jig in the slide direction, and the face material fitting claws which are respectively formed in both the face materials are adapted to enter the tip-split space therebetween.

7. A method of laying a face material, **characterized by** comprising, by using the slide jig for connection according to claim 1, 2, 3, 4, 5 or 6, connecting the face materials together by fitting the face material fitting claws of the face materials to the face material connecting member fitting claws of the face material connecting member, respectively, so as to lay the face materials on an inner circumferential face of a pipe.

8. A slide jig (3E) for connecting face materials (1A, 1B), which is used to connect two belt-like face materials arranged side by side in a width direction together by fitting one face material fitting claw to another face material fitting claw, the one face material fitting claw being formed in a groove which is formed at an end portion of one face material in the width direction between the two belt-like face, the other face material fitting claw being formed at an end portion of the other face material in the width direction, wherein
the slide jig comprises: a support portion (31) that is inserted into the groove of the one face material; and a pressing portion (33) that presses a surface of the other face material, which are integrated with a joint portion,
the support portion is provided so as to be positioned in a front of the jig in a slide direction, and the pressing portion is provided so as to be positioned in a rear of the jig in the slide direction,
the slide jig being **characterized by** further comprising
a protrusion guide portion (32) that is provided between the support portion and the pressing portion so as to abut on the protrusion which is formed in the other face material.

9. The slide jig for connecting face materials according to claim 8, **characterized in that** the support portion is extended from the joint portion toward the front of the jig in the slide direction, and the pressing portion is extended from the joint portion toward the rear of the jig in the slide direction.

10. The slide jig for connecting face materials according to claim 8 or 9, **characterized in that** a rear end portion of the pressing portion of the jig in the slide direction is positioned in a rear of a rear end portion of the support portion of the jig in the slide direction.

11. The slide jig for connecting face materials according to claim 8, **characterized in that** the protrusion guide portion is provided so as to incline in a direction of entering the groove which is formed at the end portion of the one face material in the width direction, toward the rear of the jig in the slide direction.

12. The slide jig for connecting face materials according to claim 8 or 11, **characterized in that** the protrusion guide portion controls the protrusion which is formed in the other face material so as to displace the protrusion in a direction opposite to the face material fitting claw that is formed in the one face material.

13. The slide jig for connecting face materials according to claim 12, **characterized in that** the protrusion guide portion is formed in a tip-split state toward the rear of the jig in the slide direction, and the face material fitting claw which is formed in the one face material is adapted to enter the tip-split space therebetween.

14. A method of laying a face material, **characterized by** comprising, by using the slide jig for connection according to claim 8, 9, 10, 11, 12 or 13, connecting the face materials together by causing the face material fitting claws of the face materials to fit each other so as to lay the face materials on an inner circumferential face of a pipe.

## Patentansprüche

1. Schiebervorrichtung (3A) zur Verbindung von Flächenmaterialien (1), die verwendet wird, um zwei bandähnliche Flächenmaterialien, die Seite an Seite angeordnet sind, in einer Breitenrichtung durch Befestigung von Flächenmaterial-Befestigungsgreifern jeweils an Flächenmaterialverbindungselement-Befestigungsgreifern miteinander zu verbinden, wobei die Befestigungsflächenmaterial-Befestigungsgreifer jeweils in Kerben gebildet sind, die jeweils an Endabschnitten der zwei Flächenmaterialien in der Breitenrichtung gebildet sind, wobei die Flächenmaterialverbindungselement-Befestigungsgreifer entgegengesetzt in zwei Fortsätzen, die so gebildet sind, einen Spalt dazwischen aufzuweisen, in einem Flächenmaterialverbindungselement gebildet sind, das über die Endabschnitte der zwei Flächenmaterialien in der Breitenrichtung angeordnet ist, wobei
die Schiebervorrichtung umfasst: einen Stützabschnitt (31), der in eine Kerbe eines Flächenmaterials eingesetzt ist; und einen Pressabschnitt (33), der eine Oberfläche des Flächenmaterialverbindungselements presst, die mit einem Fugenabschnitt eingegliedert sind, und
der Stützabschnitt bereitgestellt ist, um an einer Vorderseite der Vorrichtung in einer Schubrichtung positioniert zu werden, und der Pressabschnitt bereitgestellt ist, an einer Rückseite der Vorrichtung in der Schubrichtung positioniert zu werden,
wobei die Schiebervorrichtung **dadurch gekennzeichnet** ist, weiter zu umfassen
einen Fortsatzleitabschnitt (32), der zwischen dem Stützabschnitt und dem Pressabschnitt bereitgestellt ist, um zwischen den Fortsätzen eingesetzt zu werden, die im Flächenmaterialverbindungselement gebildet sind.

2. Schiebervorrichtung zum Verbinden von Flächenmaterialien nach Anspruch 1, **dadurch gekennzeichnet, dass** der Stützabschnitt sich vom Fugenabschnitt hin zur Vorderseite der Vorrichtung in der Schubrichtung erstreckt und der Pressabschnitt sich vom Fugenabschnitt hin zur Rückseite der Vorrichtung in der Schubrichtung erstreckt.

3. Schiebervorrichtung zum Verbinden von Flächenmaterialien nach Anspruch 1 oder 2, **dadurch gekennzeichnet, dass** ein Rückendabschnitt des Pressabschnitts der Vorrichtung in der Schubrichtung an einer Rückseite eines Rückendabschnitts des Stützabschnitts der Vorrichtung in der Schubrichtung positioniert ist.

4. Schiebervorrichtung zum Verbinden von Flächenmaterialien nach Anspruch 1, **dadurch gekennzeichnet, dass** der Fortsatzleitabschnitt bereitgestellt ist, um sich in einer Eintrittsrichtung in die Kerbe, die am Endabschnitt des Flächenmaterials in der Breitenrichtung gebildet ist, hin zur Rückseite der Vorrichtung in der Schubrichtung zu neigen.

5. Schiebervorrichtung zum Verbinden von Flächenmaterialien nach Anspruch 1 oder 4, **dadurch gekennzeichnet, dass** der Fortsatzleitabschnitt die Fortsätze steuert, die im Flächenmaterialverbindungselement gebildet sind, um den Spalt dazwischen durch Pressen aufzuweiten.

6. Schiebervorrichtung zum Verbinden von Flächenmaterialien nach Anspruch 5, **dadurch gekennzeichnet, dass** der Fortsatzleitabschnitt in einem spitzengetrennten Zustand zur Rückseite der Vorrichtung in der Schubrichtung gebildet ist und die Flächenmaterial-Befestigungsgreifer, die jeweils an beiden Flächenmaterialien gebildet sind, angepasst sind, in den spitzengetrennten Raum dazwischen einzutreten.

7. Verfahren zum Verlegen eines Flächenmaterials, **gekennzeichnet dadurch**, zu umfassen, unter Verwendung der Schiebervorrichtung zur Verbindung nach Anspruch 1, 2, 3, 4, 5 oder 6, die Flächenmaterialien durch Befestigen der Flächenmaterial-Befestigungsgreifer der Flächenmaterialien jeweils an die Flächenmaterialverbindungselement-Befestigungsgreifer des Flächenmaterialverbindungselements zu verbinden, um die Flächenmaterialien an einer Innenumfangsfläche einer Röhre zu verlegen.

8. Schiebervorrichtung (3E) zum Verbinden von Flächenmaterialien (1A, 1B), die verwendet wird, um zwei bandähnliche Flächenmaterialien, die Seite an Seite angeordnet sind, in einer Breitenrichtung durch Befestigen eines Flächenmaterial-Befestigungsgreifers an einem anderen Flächenmaterial-Befestigungsgreifer miteinander zu verbinden, wobei der eine Flächenmaterial-Befestigungsgreifer in einer Kerbe gebildet ist, die an einem Endabschnitt eines Flächenmaterials in der Breitenrichtung zwischen den zwei bandähnlichen Flächen gebildet ist, wobei der andere Flächenmaterial-Befestigungsgreifer an einem Endabschnitt des anderen Flächenmaterials in der Breitenrichtung gebildet ist, wobei
die Schiebervorrichtung umfasst: einen Stützabschnitt (31), der in die Kerbe des einen Flächenmaterials eingesetzt ist; und einen Pressabschnitt (33), der eine Oberfläche des anderen Flächenmaterials presst, die mit einem Fugenabschnitt eingegliedert sind,
der Stützabschnitt bereitgestellt ist, um an einer Vorderseite der Vorrichtung in einer Schubrichtung positioniert zu werden, und der Pressabschnitt bereitgestellt ist, um an einer Rückseite der Vorrichtung in der Schubrichtung positioniert zu werden,
die Schiebervorrichtung **dadurch gekennzeichnet** ist, weiter zu umfassen
einen Fortsatzleitabschnitt (32), der zwischen dem Stützabschnitt und dem Pressabschnitt bereitgestellt ist, um an den Fortsatz anzuliegen, der im anderen Flächenmaterial gebildet ist.

9. Schiebervorrichtung zum Verbinden von Flächenmaterialien nach Anspruch 8, **dadurch gekennzeichnet, dass** der Stützabschnitt sich vom Fugenabschnitt hin zur Vorderseite der Vorrichtung in der Schubrichtung erstreckt und der Pressabschnitt sich vom Fugenabschnitt hin zur Rückseite der Vorrichtung in der Schubrichtung erstreckt.

10. Schiebervorrichtung zum Verbinden von Flächenmaterialien nach Anspruch 8 oder 9, **dadurch gekennzeichnet, dass** ein Rückendabschnitt des Pressabschnitts der Vorrichtung in der Schubrichtung an einer Rückseite eines Rückendabschnitts des Stützabschnitts der Vorrichtung in der Schubrichtung positioniert ist.

11. Schiebervorrichtung zum Verbinden von Flächenmaterialien nach Anspruch 8, **dadurch gekennzeichnet, dass** der Fortsatzleitabschnitt bereitgestellt ist, um sich in einer Eintrittsrichtung in die Kerbe, die am Endabschnitt des einen Flächenmaterials in der Breitenrichtung gebildet ist, hin zur Rückseite der Vorrichtung in der Schubrichtung zu neigen.

12. Schiebervorrichtung zum Verbinden von Flächenmaterialien nach Anspruch 8 oder 11, **dadurch gekennzeichnet, dass** der Fortsatzleitabschnitt den Fortsatz steuert, der im anderen Flächenmaterial gebildet ist, um den Fortsatz in einer Richtung entgegen dem Flächenmaterial-Befestigungsgreifer zu versetzen, der in dem einen Flächenmaterial gebildet ist.

13. Schiebervorrichtung zum Verbinden von Flächenmaterialien nach Anspruch 12, **dadurch gekennzeichnet, dass** der Fortsatzleitabschnitt in einem spitzengetrennten Zustand hin zur Rückseite der Vorrichtung in der Schubrichtung gebildet ist und der Flächenmaterial-Befestigungsgreifer, der in dem einen Flächenmaterial gebildet ist, angepasst ist, dazwischen in den spitzengetrennten Raum einzutreten.

14. Verfahren zum Verlegen eines Flächenmaterials, **gekennzeichnet durch** umfassend, unter Verwendung der Schiebervorrichtung zur Verbindung nach Anspruch 8, 9, 10, 11, 12 oder 13, Verbinden der Flächenmaterialien miteinander durch Veranlassen der Flächenmaterial-Befestigungsgreifer der Flächenmaterialien aneinander befestigt zu werden, um die Flächenmaterialien an einer Innenumfangsfläche einer Röhre zu verlegen.

## Revendications

1. Gabarit coulissant (3A) pour raccorder des matériaux de revêtement (1), qui est utilisé pour raccorder deux matériaux de revêtement de type courroie agencés côté à côte dans un sens de largeur conjointement en ajustant des griffes d'ajustement de matériaux de revêtement à des griffes d'ajustement d'éléments de raccordement de matériaux de revêtement, respectivement, les griffes d'ajustement de matériaux de revêtement d'ajustement étant respectivement formées dans des rainures qui sont respectivement formées au niveau de parties d'extrémité des deux matériaux de revêtement dans le sens de largeur, les griffes d'ajustement d'éléments de raccordement de matériaux de revêtement étant formées en regard dans deux saillies qui sont formées de manière à présenter un intervalle entre elles dans un élément de raccordement de matériaux de revêtement agencé en travers des parties d'extrémité des deux matériaux de revêtement dans le sens de largeur, dans lequel
le gabarit coulissant comprend : une partie de support (31) qui est insérée dans une rainure d'un matériau de revêtement ; et une partie de compression (33) qui compresse une surface de l'élément de raccordement de matériaux de revêtement, qui sont intégrées avec une partie de jonction, et
la partie de support est aménagée de manière à être positionnée à l'avant du gabarit dans un sens de coulissement, et la partie de compression est aménagée de manière à être positionnée à l'arrière du gabarit dans le sens de coulissement,
le gabarit coulissant étant **caractérisé en ce qu'**il comprend en outre
une partie de guidage de saillies (32) qui est aménagée entre la partie de support et la partie de compression de manière à être insérée entre les saillies qui sont formées dans l'élément de raccordement de matériaux de revêtement.

2. Gabarit coulissant pour raccorder des matériaux de revêtement selon la revendication 1, **caractérisé en ce que** la partie de support s'étend de la partie de jonction vers l'avant du gabarit dans le sens de coulissement, et la partie de compression s'étend de la partie de jonction vers l'arrière du gabarit dans le sens de coulissement.

3. Gabarit coulissant pour raccorder des matériaux de revêtement selon la revendication 1 ou 2, **caractérisé en ce qu'**une partie d'extrémité arrière de la partie de compression du gabarit dans le sens de coulissement est positionnée à l'arrière d'une partie d'extrémité arrière de la partie de support du gabarit dans le sens de coulissement.

4. Gabarit coulissant pour raccorder des matériaux de revêtement selon la revendication 1, **caractérisé en ce que** la partie de guidage de saillies est aménagée de manière à s'incliner dans un sens de pénétration dans la rainure qui est formée au niveau de la partie d'extrémité du matériau de revêtement dans le sens de largeur, vers l'arrière du gabarit dans le sens de coulissement.

5. Gabarit coulissant pour raccorder des matériaux de revêtement selon la revendication 1 ou 4, **caractérisé en ce que** la partie de guidage de saillies commande les saillies qui sont formées dans l'élément de raccordement de matériaux de revêtement de manière à élargir par compression l'intervalle entre elles.

6. Gabarit coulissant pour raccorder des matériaux de revêtement selon la revendication 5, **caractérisé en ce que** la partie de guidage de saillies est formée dans un état de séparation de pointe vers l'arrière du gabarit dans le sens de coulissement, et les griffes d'ajustement de matériaux de revêtement qui sont respectivement formées dans les deux matériaux de revêtement sont à même de pénétrer dans l'espace de séparation de pointe entre eux.

7. Procédé de pose d'un matériau de revêtement, **caractérisé en ce qu'**il comprend, en utilisant le gabarit coulissant pour un raccordement selon la revendication 1, 2, 3, 4, 5 ou 6, le raccordement des matériaux de revêtement conjointement en ajustant les griffes d'ajustement de matériaux de revêtement des matériaux de revêtement aux griffes d'ajustement d'éléments de raccordement de matériaux de revêtement de l'élément de raccordement de matériaux de revêtement, respectivement, de manière à poser les matériaux de revêtement sur une face circonférentielle interne d'un tuyau.

8. Gabarit coulissant (3E) pour raccorder des matériaux de revêtement (1A, 1B), qui est utilisé pour raccorder deux matériaux de revêtement de type courroie agencés côté à côte dans un sens de largeur conjointement en ajustant une griffe d'ajustement de matériaux de revêtement à une autre griffe d'ajustement de matériaux de revêtement, la une griffe d'ajustement de matériaux de revêtement étant formée dans une rainure qui est formée au niveau d'une partie d'extrémité d'un matériau de revêtement dans le sens de largeur entre les deux matériaux de revêtement de type courroie, l'autre griffe d'ajustement de matériaux de revêtement étant formée au niveau d'une partie d'extrémité de l'autre matériau de revêtement dans le sens de largeur, dans lequel
le gabarit coulissant comprend : une partie de support (31) qui est insérée dans la rainure du un matériau de revêtement ; et une partie de compression (33) qui compresse une surface de l'autre matériau de revêtement, qui sont intégrées avec une partie de jonction,
la partie de support est aménagée de manière à être positionnée à l'avant du gabarit dans un sens de coulissement, et la partie de compression est aménagée de manière à être positionnée à l'arrière du gabarit dans le sens de coulissement,
le gabarit coulissant étant **caractérisé en ce qu'**il comprend en outre
une partie de guidage de saillies (32) qui est aménagée entre la partie de support et la partie de compression de manière à s'abouter sur la saillie qui est formée dans l'autre matériau de revêtement.

9. Gabarit coulissant pour raccorder des matériaux de revêtement selon la revendication 8, **caractérisé en ce que** la partie de support s'étend de la partie de jonction vers l'avant du gabarit dans le sens de coulissement, et la partie de compression s'étend de la partie de jonction vers l'arrière du gabarit dans le sens de coulissement.

10. Gabarit coulissant pour raccorder des matériaux de revêtement selon la revendication 8 ou 9, **caractérisé en ce qu'**une partie d'extrémité arrière de la partie de compression du gabarit dans le sens de coulissement est positionnée à l'arrière d'une partie d'extrémité arrière de la partie de support du gabarit dans le sens de coulissement.

11. Gabarit coulissant pour raccorder des matériaux de revêtement selon la revendication 8, **caractérisé en ce que** la partie de guidage de saillies est aménagée de manière à s'incliner dans un sens de pénétration dans la rainure qui est formée au niveau de la partie d'extrémité du un matériau de revêtement dans le sens de largeur, vers l'arrière du gabarit dans le sens de coulissement.

12. Gabarit coulissant pour raccorder des matériaux de revêtement selon la revendication 8 ou 11, **caractérisé en ce que** la partie de guidage de saillies commande la saillie qui est formée dans l'autre matériau de revêtement de manière à déplacer la saillie dans un sens opposé à la griffe d'ajustement de matériaux de revêtement qui est formée dans le un matériau de revêtement.

13. Gabarit coulissant pour raccorder des matériaux de revêtement selon la revendication 12, **caractérisé en ce que** la partie de guidage de saillies est formée dans un état de séparation de pointe vers l'arrière du gabarit dans le sens de coulissement, et la griffe d'ajustement de matériaux de revêtement qui est formée dans le un matériau de revêtement est à même de pénétrer dans l'espace de séparation de pointe entre eux.

14. Procédé de pose d'un matériau de revêtement, **caractérisé en ce qu'**il comprend, en utilisant le gabarit coulissant pour un raccordement selon la revendication 8, 9, 10, 11, 12 ou 13, le raccordement des matériaux de revêtement conjointement en amenant les griffes d'ajustement de matériaux de revêtement des matériaux de revêtement à s'ajuster l'une à l'autre de manière à poser les matériaux de revêtement sur une face circonférentielle interne d'un tuyau.
